# FASCICULE DE BREVET EUROPEEN

(11) **EP 2 542 727 B1**
(45) Date de publication et mention de la délivrance du brevet: **14.02.2018**
(21) Numéro de dépôt: 11712953.6
(22) Date de dépôt: 02.03.2011
(51) Int. Cl.: E03D 1/00, E03D 1/32, F16K 31/18

(54) **DÉTECTION DE FUITE SUR ROBINET DE CHASSE D'EAU**
LECKERKENNUNG BEI EINEM SPÜLBLOCK
LEAK DETECTION ON FLUSH VALVE

(30) Priorité: 02.03.2010 FR 1051475
(43) Date de publication de la demande: 09.01.2013
(73) Titulaire: Magar, Hubert, 57320 Schwerdoff (FR)
(72) Inventeur: Magar, Hubert, 57320 Schwerdoff (FR)
(74) Mandataire: Rhein, Alain
(86) Numéro de dépôt international: PCT/FR2011/050435
(87) Numéro de publication internationale: WO 2011/107711

(56) Documents cités:
- WO-A2-2009/141518

## Description

L'invention concerne un dispositif de détection des fuites et de coupure de l'arrivée d'eau dans le réservoir de chasse des toilettes.

Les dispositifs de chasse d'eau actuellement connus comportent généralement un robinet fixé sur le corps du réservoir, un piston obturateur pour l'orifice d'écoulement situé à la base du réservoir et un moyen de commande d'ouverture de l'arrivée d'eau assujetti à la position du piston. Le moyen de commande est usuellement un flotteur relié à un système de tringles qui permet lors du remplissage du réservoir de fermer la valve d'amenée d'eau, le réglage de la hauteur d'eau dans le réservoir étant réalisé par le positionnement du flotteur.

En fonctionnement normal la chasse d'eau est déclenchée par un bouton poussoir ou une manette ayant pour effet d'ouvrir l'évacuation à la base du réservoir, la chute du flotteur dans le réservoir déclenche alors l'ouverture de l'admission d'eau, l'obturateur à la base du réservoir reprend ensuite sa position et le réservoir se remplit. Lorsque le flotteur atteint sa position haute maximale, l'admission est coupée.

Au cours du temps il arrive que l'étanchéité de l'obturateur ne soit plus aussi parfaite que souhaitée et l'eau du réservoir s'écoule alors en permanence vers les toilettes, ce type de défaut de fonctionnement est appelé dans la suite de la présente description « petite fuite ».

Il arrive également que l'obturateur ne se repositionne pas du tout après le tirage de la chasse, dans cette situation l'eau s'écoule en permanence de manière très importante, ce type de défaut de fonctionnement est appelé dans la suite de la présente description « grande fuite ».

Les défauts de petite fuite et de grande fuite conduisent à une surconsommation d'eau très dommageable dans le contexte actuel de préservation des ressources. Afin d'éviter des coûts par ailleurs inutiles il convient donc de limiter au maximum ces fuites.

Dans le domaine considéré le déposant a déjà présenté des solutions pour pallier aux fuites sur les chasses d'eau, la présente invention représente une amélioration par rapport notamment au dispositif décrit dans la demande publiée sous la référence WO2009141518.

L'invention propose un dispositif unique et compact, optimisé, permettant d'éviter l'écoulement intempestif de l'eau dans les chasses d'eau en cas de petite ou de grande fuite.

L'invention concerne un dispositif de détection de fuites et de coupure de l'arrivée d'eau dans un réservoir principal de chasse de toilettes comprenant les caractéristiques de la revendication 1. Les avantages du dispositif de détection des fuites et de coupure de l'arrivée d'eau selon l'invention sont multiples :
- un seul ensemble est capable de pallier à la fois au problème de grande et de petite fuite sur les chasses d'eau,
- le flotteur est totalement ou partiellement plongé dans le compartiment à flotteur ce qui évite l'emploi de systèmes mécaniques complexes qui entrainent usuellement une perte de fiabilité du dispositif,
- le réarmement par débordement est simple et fiable contrairement aux dispositifs de l'état de la technique dont le mécanisme de réarmement risque souvent de mettre en péril l'ensemble du dispositif de détection de fuites en cas de blocage accidentel du mécanisme, différentes variantes étant possibles pour relancer la chasse d'eau en cas de petite ou de grande fuite ; il est également possible de maintenir le robinet flotteur en position de fermeture sur la durée de vidage du réservoir principal de chasse d'eau, l'ouverture se faisant lors de la baisse et fermeture du mécanisme de chasse, obtenant ainsi une temporisation à l'ouverture avec comme avantage une diminution de la consommation, et par là même une économie d'eau.
- le dispositif est globalement peu coûteux à installer et représente à l'usage des économies importantes tant pour l'usager que pour la collectivité en raison de la préservation de la ressource en eau.

Selon d'autres caractéristiques :
- ledit mécanisme peut comprendre un flotteur de manoeuvre relié à un levier, ou bouton, de manoeuvre de la chasse configuré pour qu'un actionnement dudit levier, ou bouton, de manoeuvre provoque l'enfoncement dudit flotteur de manoeuvre dans ledit compartiment à flotteur et une surverse d'une partie de l'eau contenue dans ledit compartiment à flotteur et que le relâchement dudit levier, ou bouton, de manoeuvre permet la remontée dudit flotteur de manoeuvre ce qui produit un enfoncement du flotteur et une ouverture de l'arrivée d'eau ; une telle solution permet de s'affranchir d'un tuyau, ainsi que d'un piston ou soufflet, et est par là même universel ; il peut être utilisé aussi bien en alimentation basse que latérale, l'alimentation se faisant grâce à un flexible,
- ledit mécanisme peut comprendre un réservoir de lestage situé au-dessus dudit flotteur configuré pour provoquer l'enfoncement dudit flotteur en cas d'actionnement de la chasse,
- l'écoulement de l'eau du réservoir de lestage peut s'effectuer en dehors du compartiment à flotteur par un conduit spécifique,
- ledit conduit spécifique peut être muni d'un orifice d'écoulement vers le réservoir principal de la chasse d'eau, lequel orifice d'écoulement étant pourvu d'une valve, lequel orifice d'écoulement permettant l'écoulement de l'eau en provenance du réservoir de lestage lorsque celui-ci est en mesure de se vider,
- le compartiment à flotteur peut recevoir l'eau du réservoir de lestage lorsque celui-ci est en mesure de se vider,
- un tube principal peut mettre en communication une cloche haute disposée dans un réservoir haut situé au-dessus dudit compartiment à flotteur, avec la zone proche du niveau du bas du réservoir principal de chasse, ledit réservoir haut, ladite cloche haute et ledit tube principal étant configurés de sorte qu'une baisse de niveau d'eau dans le tube principal produise une montée du niveau d'eau dans la cloche haute, ladite montée du niveau d'eau produisant une remontée du flotteur ; une telle disposition peut permettre de détecter les grandes fuites, et de couper l'arrivée d'eau en cas de grande fuite,
- ledit réservoir haut et ladite cloche haute peuvent être configurés pour qu'une montée du niveau d'eau dans la cloche haute produise un écoulement par un siphon vers un compartiment central, puis par un tube central vers le compartiment à flotteur,
- les extrémités de deux tubes, le tube principal et un deuxième tube, peuvent aboutir dans la cloche haute, ledit réservoir haut étant alimenté en eau au moyen d'une ouverture pratiquée dans la colonne de remplissage,
- l'extrémité basse dudit tube principal peut être munie d'une cloche basse disposée dans un réservoir bas comportant un orifice d'écoulement calibré,
- un réservoir intermédiaire peut être solidaire du compartiment à flotteur et susceptible de l'alimenter en eau pour son remplissage,
- un réservoir intermédiaire peut être solidaire du réservoir haut et alimenté en eau par ce dernier au moyen d'un bac de surverse,
- le mécanisme d'actionnement peut comporter une cloche positionnée sous le flotteur, laquelle cloche étant reliée par un tuyau à l'intérieur d'un piston, lequel piston étant déplacé par le mécanisme d'actionnement ; un tel mécanisme sera généralement utilisé comme mécanisme de réarmement après coupure d'eau suite à une petite fuite ou une grande fuite,
- le mécanisme d'actionnement peut comporter un mécanisme de réarmement muni d'une cloche positionnée sous le flotteur, laquelle cloche étant reliée par un tuyau à un soufflet, lequel soufflet étant actionné par un cylindre déplacé par le levier d'actionnement,
- le mécanisme d'actionnement peut comporter un vase muni d'une cloche dans laquelle aboutit un tuyau relié à un soufflet, lequel soufflet étant actionné par un cylindre déplacé par le mécanisme d'actionnement ; un tel mécanisme sera généralement utilisé comme mécanisme de réarmement après coupure d'eau suite à une petite fuite ou une grande fuite,

D'autres caractéristiques et avantages de l'invention se dégageront de la description qui va suivre en regard des dessins annexés qui ne sont donnés qu'à titre d'exemples non limitatifs.
La figure 1 est une vue en coupe du dispositif de détection des fuites et de coupure de l'arrivée d'eau selon un premier mode de réalisation,
La figure 2 est une vue en coupe du dispositif de détection des fuites et de coupure de l'arrivée d'eau selon un deuxième mode de réalisation,
La figure 3 est une vue en coupe du dispositif de détection des fuites et de coupure de l'arrivée d'eau selon un troisième mode de réalisation,
La figure 4 est une vue en coupe du dispositif de détection des fuites et de coupure de l'arrivée d'eau selon un quatrième mode de réalisation,
La figure 5 illustre une première variante d'un système de réarmement du dispositif consécutivement à une petite ou une grande fuite,
La figure 6 illustre un système de réarmement selon une deuxième variante.

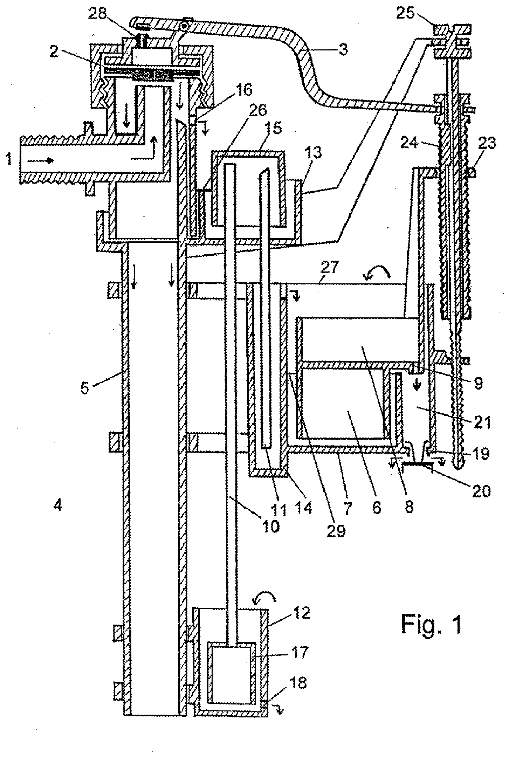

Selon un exemple avantageux de réalisation de l'invention illustré dans la figure 1 le dispositif de détection des fuites et de coupure de l'arrivée d'eau 1 est installé dans un réservoir principal 4 de chasse de toilettes et relié au circuit d'eau d'apport.

L'arrivée d'eau 1 est contrôlée par une valve principale 2 dont la fermeture est assurée par un levier de commande 3, laquelle valve principale 2 alimente le réservoir principal 4 de chasse par l'intermédiaire d'une colonne de remplissage 5. Un flotteur 6 contenu dans un compartiment à flotteur 7 assure le pivotement du levier de commande 3 lorsque le réservoir principal 4 de chasse est rempli par rapport à sa position lorsque ledit réservoir principal 4 est vide.

Selon ce mode de réalisation de l'invention le flotteur 6 est muni dans sa partie supérieure d'un réservoir de lestage 8. Ledit réservoir comporte à sa base un orifice d'écoulement calibré 9 permettant sa vidange complète. Ledit flotteur 6 est toujours plongé partiellement ou en totalité dans le compartiment à flotteur 7.

Le dispositif comporte aussi un ensemble de deux tubes, un tube principal 10 et un deuxième tube 11 mettant en communication trois réservoirs, un réservoir bas 12 utile pour détecter les grandes fuites positionné au niveau du bas de la colonne de remplissage 5, un réservoir haut 13 placé au niveau haut de la colonne de remplissage 5 au-dessus du compartiment à flotteur 7 et un réservoir intermédiaire 14. Ces deux derniers réservoirs, haut 13 et intermédiaire 14, sont utiles pour la régulation des flux hydrauliques.

Plus précisément le réservoir haut 13 est muni d'une cloche haute 15 dans laquelle aboutissent les extrémités des deux tubes de communication 10 et 11. Ledit réservoir haut 13 est alimenté en eau au moyen d'une ouverture 16 pratiquée dans la colonne de remplissage 5.

Selon l'invention un tube de communication, le tube principal 10, muni à son extrémité basse d'une cloche basse 17 positionnée dans le réservoir bas 12, forme une communication entre ledit réservoir bas 12 et le réservoir haut 13.

Le réservoir bas 12 est muni dans sa partie inférieure d'un orifice d'écoulement calibré 18 permettant un écoulement lent et contrôlé de l'eau lorsque le réservoir principal 4 est vide.

Selon une première variante du dispositif, illustrée à la fig. 1 le dispositif comprend un conduit spécifique 21 muni d'un orifice d'écoulement 19 vers le réservoir principal 4 de la chasse d'eau. Ledit orifice d'écoulement 19 est pourvu d'une valve secondaire 20, et permet l'écoulement de l'eau en provenance du réservoir de lestage 8 lorsque celui-ci est en mesure de se vider.

Selon cette première variante l'écoulement de l'eau du réservoir de lestage 8 s'effectue en dehors du compartiment à flotteur 7 par ledit conduit spécifique 21.

Toujours selon cette variante le réservoir intermédiaire 14 est solidaire du compartiment à flotteur 7 et susceptible de l'alimenter en eau pour son remplissage.

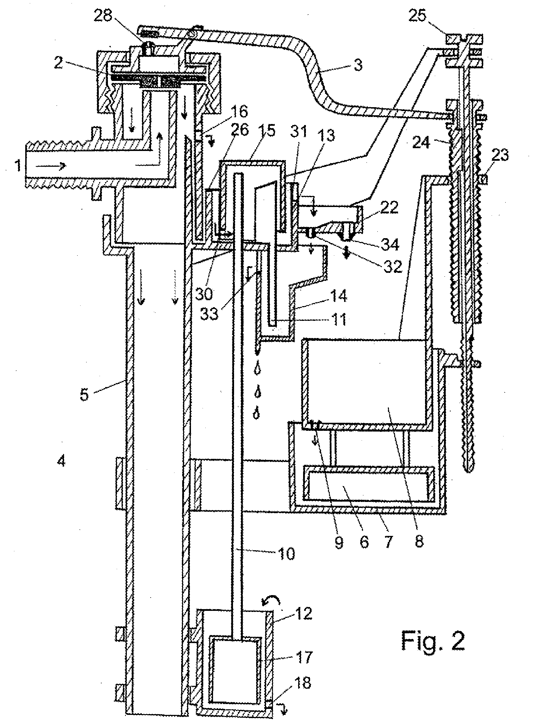

Selon une deuxième variante de l'invention illustrée dans la figure 2 le compartiment à flotteur 7 reçoit l'eau du réservoir de lestage 8 lorsque celui-ci est en mesure de se vider.

Dans cette deuxième variante le réservoir intermédiaire 14 est solidaire du réservoir haut 13 et alimenté en eau par ce dernier au moyen d'un bac de surverse 22.

Tel que cela est illustré sur les figures 1 à 4 le flotteur 6, est relié solidairement à une pièce 23 pouvant se déplacer par coulissement le long d'un guide vertical. Une vis de réglage 25 qui permet l'ajustement en hauteur du mouvement du flotteur 6 simultanément avec le compartiment à flotteur 7 en déplaçant verticalement la pièce 23 par filetage par rapport à sa pièce support 24.

Selon l'une ou l'autre de ces quatre variantes du dispositif considéré, le réarmement de la chasse d'eau, consécutivement à une petite ou une grande fuite, s'effectue par une simple action sur le levier de commande 3 ou sur un mécanisme d'actionnement 47, 49. Une telle action a pour effet d'enfoncer le flotteur 6 dans le compartiment à flotteur 7, lequel abaissement du flotteur 6 enclenchant l'admission d'eau 1 dans le réservoir principal 4 de chasse d'eau.

De manière à préciser le fonctionnement du dispositif selon la première variante il est maintenant fait référence à la figure 1 :
Lors de la première mise en eau de la chasse le niveau d'eau monte dans le réservoir principal 4 en s'écoulant par la colonne de remplissage 5 et à travers l'ouverture 16. L'eau qui arrive par ladite ouverture 16 remplit le réservoir haut 13. Les deux tubes 10 et 11 sont remplis d'air et sous pression atmosphérique. Le niveau dans le réservoir haut 13 ainsi que dans la cloche haute 15 est maintenu constant grâce au déversoir 26. Lorsque le niveau d'eau monte dans le réservoir principal 4 l'eau remplit le réservoir bas 12 et inonde la cloche basse 17. L'air refoulé le long du tube principal 10 arrive dans la cloche haute 15 et est évacué par le deuxième tube 11. En continuant de monter dans le réservoir principal 4, l'eau atteint le niveau de la valve secondaire 20 qui obture alors l'orifice d'écoulement 19, puis se déverse dans le compartiment à flotteur 7 en passant au-dessus du rebord 27. Le compartiment à flotteur 7 se remplit, ainsi que le réservoir de lestage 8 en produisant la remontée du flotteur 6 et le coulissement de la pièce 23 et de la pièce support 24 le long du guide vertical. Le réservoir intermédiaire 14 se remplit également. Lorsque le niveau haut est atteint le basculement du levier de commande 3 provoque une pression sur l'orifice d'admission 28 qui actionne la valve principale 2 dans le sens de la coupure de l'arrivée d'eau 1.

Lors du tirage de la chasse d'eau et de la descente du niveau dans le réservoir principal 4, la valve secondaire 20 est libérée et l'eau s'évacue rapidement de la partie haute du compartiment à flotteur 7 par l'orifice d'écoulement 19. En revanche l'eau contenue dans le réservoir de lestage 8 n'a pas le temps de s'évacuer par l'orifice d'écoulement calibré 9 et le lest fait descendre le flotteur 6 dans le compartiment à flotteur 7. L'eau placée dans le compartiment à flotteur 7 passe au-dessus du rebord 29 et s'évacue par l'orifice d'écoulement 19. Le flotteur 6 reste alors en position basse malgré la vidange lente du réservoir de lestage 8. Lorsque l'eau remonte dans le réservoir principal 4 la valve secondaire 20 est à nouveau fermée. L'eau remplit ensuite le compartiment à flotteur 7 et fait remonter ledit flotteur 6 qui déclenche l'arrêt de l'admission d'eau 1 et un nouveau cycle peut recommencer.

En cas de petite fuite sur l'évacuation, le niveau d'eau dans le réservoir principal 4 descend lentement, entraînant également une baisse du niveau autour du réservoir de lestage 8 et l'évacuation de l'eau à travers l'orifice d'écoulement 19. L'eau dans le réservoir de lestage 8 a alors le temps de s'évacuer à travers l'orifice d'écoulement calibré 9 tandis que le compartiment à flotteur 7 reste rempli, ce qui permet le maintien en position haute du flotteur 6 et évite l'admission d'eau 1 dans le réservoir principal 4, ce dernier se vidant progressivement. Pour le réarmement il suffit d'appuyer sur le levier de commande 3 de manière à faire descendre le flotteur 6 dans son compartiment, ce qui entraîne le débordement de l'eau contenue dans le compartiment à flotteur 7 et la relance de l'admission d'eau 1.

En cas de grande fuite, le réservoir principal 4 reste vide et l'eau s'écoule en permanence. L'eau contenue dans le réservoir bas 12 s'évacue progressivement à travers l'orifice d'écoulement calibré 18 jusqu'à vidange complète du réservoir bas 12. Lorsque l'eau arrive à la hauteur de la cloche basse 17 le niveau d'eau dans la cloche haute 15 supérieure remonte au fur et à mesure que le niveau baisse dans le réservoir bas 12, ce qui a pour effet d'amener le niveau d'eau dans la cloche haute 15 au niveau de l'embouchure du deuxième tube 11. Cela permet le déversement de l'eau dans le réservoir intermédiaire 14. L'eau se déverse ensuite dans le compartiment à flotteur 7 avec lequel il communique. Cela a pour effet de faire remonter le flotteur 6 et actionner le levier de commande 3 pour l'arrêt de l'admission d'eau 1. Le réarmement est opéré de la même façon que dans le cas d'une petite fuite, par une pression sur le levier de commande 3.

Le fonctionnement de la deuxième variante selon l'invention est différent et explicité ci-après en référence à la figure 2 :
Lors de la première mise en eau de la chasse le niveau d'eau monte dans le réservoir principal 4 en s'écoulant par la colonne de remplissage 5 et à travers l'ouverture 16. L'eau qui arrive par ladite ouverture 16 remplit le réservoir haut 13, puis le niveau reste constant à hauteur du déversoir 26. L'eau s'écoule ensuite à travers le passage calibré 30 pour pénétrer dans la cloche haute 15. L'eau se déverse dans le bac de surverse 22 en passant au-dessus du déversoir 31 qui permet de maintenir un niveau constant dans la cloche haute 15. Depuis le bac de surverse 22 l'eau s'écoule à travers l'orifice 32 pour remplir le réservoir intermédiaire 14 en noyant le deuxième tube 11.

Le déversoir 33 maintient un niveau stable dans le réservoir intermédiaire 14. Simultanément l'eau s'écoule aussi à travers l'orifice 34 pour remplir le réservoir de lestage 8 placé au-dessus du flotteur 6. L'eau qui s'échappe au travers de l'orifice d'écoulement calibré 9 commence alors à remplir le compartiment à flotteur 7. En remontant dans le réservoir principal 4, l'eau inonde complètement le réservoir bas 12 et refoule l'air de la cloche basse 17 à travers le tube principal 10 dans la cloche haute 15. Cela a pour effet de faire descendre le niveau d'eau dans cette dernière et d'évacuer une partie de l'air à sa base. Lorsque le niveau d'eau dans le réservoir principal 4 continue d'augmenter le compartiment à flotteur 7 est noyé puis le réservoir de lestage 8 est partiellement noyé, ce qui a pour effet de faire remonter le flotteur 6 et d'interrompre l'arrivée d'eau 1 suivant la même procédure que pour la première variante.

Lors du tirage de la chasse d'eau et de la descente du niveau dans le réservoir principal 4, le leste dans le réservoir de lestage 8 fait descendre le flotteur 6, lequel fait descendre à son tour le levier de commande 3 qui déclenche l'admission d'eau 1. Durant l'admission, l'eau en provenance du bac de surverse 22 alimente en eau le réservoir de lestage 8 pour maintenir le flotteur 6 en position basse jusqu'à ce que le niveau d'eau dans le réservoir principal 4 atteigne le niveau de remplissage du compartiment à flotteur 7, puis du réservoir de lestage 8. Le remplissage provoque alors la remontée du flotteur 6 et l'arrêt de l'admission.

En cas de petite fuite sur l'écoulement du réservoir principal 4, le niveau d'eau descend lentement ce qui laisse le temps nécessaire pour que l'eau dans le réservoir de lestage 8 s'écoule à travers l'orifice d'écoulement calibré 9. Le réservoir de lestage 8 n'est plus alors en mesure de faire descendre le flotteur 6 qui maintient le verrouillage de l'admission d'eau 1 même lorsque le réservoir principal 4 se vide. Pour réarmer le dispositif il suffit d'appuyer sur le levier de commande 3. Cela a pour effet de forcer la descente du flotteur 6, lequel provoque l'ouverture de l'admission d'eau 1. L'eau d'admission vient par l'intermédiaire du bac de surverse 22 remplir le réservoir de lestage 8 et maintenir le flotteur 6 en position basse pour un remplissage normal du réservoir principal 4.

En cas de grande fuite le réservoir principal 4 reste vide et l'eau dans le réservoir bas 12 s'évacue progressivement au travers de l'orifice d'écoulement calibré 18. Lorsque le niveau d'eau atteint le niveau de la cloche basse 17 le niveau d'eau dans la cloche haute 15 remonte progressivement en suivant la descente dans la cloche basse 17. Cela a pour effet de ramener le niveau d'eau dans la cloche haute 15 au-dessus du déversoir 31 et au niveau de l'embouchure du deuxième tube 11 dans lequel l'eau s'écoule finalement vers le réservoir intermédiaire 14. Le bac de surverse 22 n'étant plus alimenté il s'en suit que le réservoir de lestage 8 se vide progressivement en entraînant une remontée du flotteur 6 et donc la fermeture de l'admission d'eau 1. Le réarmement est opéré de la même façon que dans le cas d'une petite fuite par une pression sur le levier de commande 3.

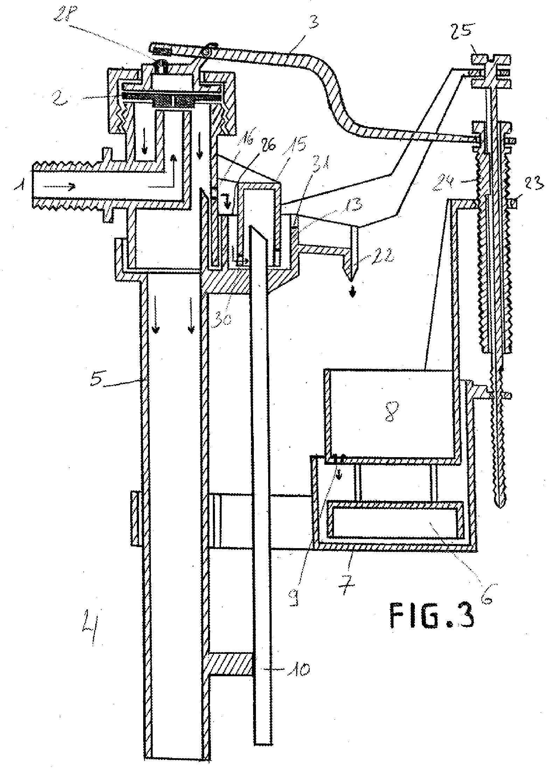

Le fonctionnement de la troisième variante selon l'invention est explicité ci-après en référence à la figure 3.

Lors de la première mise en eau de la chasse, le niveau d'eau monte dans le réservoir principal 4 en s'écoulant par la colonne de remplissage 5. L'eau qui arrive par l'ouverture 16 remplit le réservoir haut 13. Le niveau reste constant à hauteur du déversoir 26. L'eau s'écoule ensuite à travers le passage calibré 30 pour pénétrer dans la cloche haute 15 puis s'écoule à travers le tube principal 10. Le niveau d'eau en remontant dans le réservoir principal 4 vient obstruer à sa base le tube principal 10 en créant progressivement une pression d'air dans la cloche haute 15 abaissant le niveau d'eau dans cette dernière en dessous de l'embouchure du tube principal 10. L'eau s'écoule alors au dessus du déversoir 31 puis sur la rampe 22 pour remplir le réservoir de lestage 8 placé au-dessus du flotteur 6. L'eau qui s'échappe au travers de l'orifice d'écoulement calibré 9 commence alors à remplir le compartiment à flotteur 7. Lorsque le niveau d'eau dans le réservoir principal 4 continue d'augmenter le compartiment à flotteur 7 est noyé, puis le réservoir de lestage 8 est noyé en partie, ce qui a pour effet de faire remonter le flotteur 6 et d'interrompre l'arrivée d'eau 1 suivant la même procédure que pour la deuxième variante. Le niveau d'eau dans le réservoir de lestage 8 descend ensuite pour arriver au même niveau que le niveau du réservoir principal 4 de chasse d'eau. Cela permet de maintenir une pression suffisante sur l'orifice d'admission 28 en cas de variation de pression de réseau.

Lors du tirage de la chasse d'eau et de la descente du niveau dans le réservoir principal 4, le leste dans le réservoir de lestage 8 fait descendre le flotteur 6, lequel fait descendre à son tour le levier de commande 3 qui déclenche l'admission d'eau 1. Durant l'admission, l'eau en provenance de la rampe 22 alimente en eau le réservoir de lestage 8 pour maintenir le flotteur 6 en position basse jusqu'à ce que le niveau d'eau dans le réservoir principal 4 atteigne le niveau de remplissage du compartiment à flotteur 7 puis du réservoir de lestage 8. Le remplissage provoque alors la remontée du flotteur 6 et l'arrêt de l'admission.

En cas de petite fuite sur l'écoulement du réservoir principal 4, le niveau d'eau descend lentement ce qui laisse le temps nécessaire pour que l'eau dans le réservoir de lestage 8 s'écoule à travers l'orifice d'écoulement calibré 9. Le réservoir de lestage 8 n'est plus alors en mesure de faire descendre le flotteur 6 qui maintient le verrouillage de l'admission d'eau 1 même lorsque le réservoir principal 4 se vide.

En cas de grande fuite le réservoir principal 4 reste vide et le tube principal 10 se trouve à l'atmosphère ce qui a pour effet de ramener le niveau d'eau dans la cloche haute 15 au niveau de l'embouchure du tube principal 10 dans lequel l'eau s'écoule finalement vers le réservoir principal 4. L'eau ne passant plus au dessus du déversoir 31 il s'en suit que le réservoir de lestage 8 se vide progressivement en entraînant une remontée du flotteur 6 et donc la fermeture de l'admission d'eau 1. Le réarmement est opéré de la même façon que dans le cas d'une petite fuite par une pression sur le levier de commande 3.

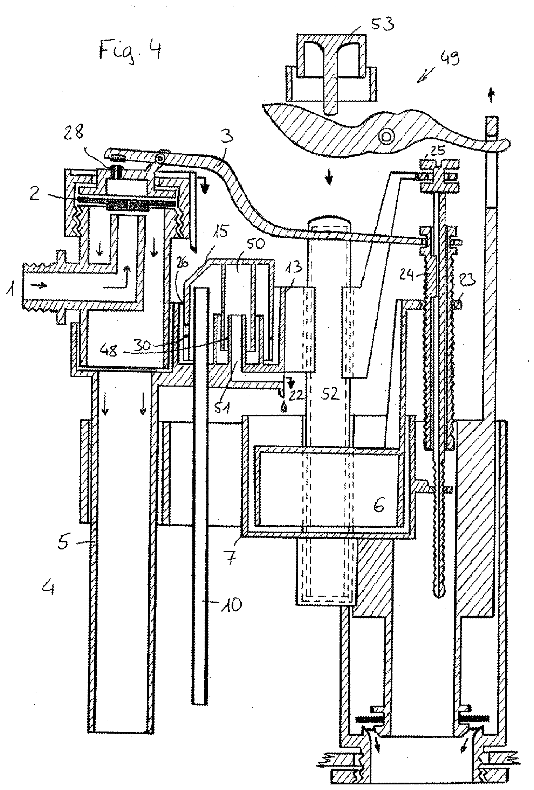

Le fonctionnement de la quatrième variante selon l'invention est explicité ci-après en référence à la figure 4.

Lors de la première mise en eau de la chasse, le niveau d'eau monte dans le réservoir principal 4 en s'écoulant par la colonne de remplissage 5. L'eau qui arrive par l'orifice d'admission 28 remplit le réservoir haut 13. L'eau s'écoule ensuite à travers l'ouverture 30 pour pénétrer dans la cloche annulaire 15, puis passe au-dessus du siphon 48 pour passer dans le compartiment central 50. De là elle s'écoule par le tube central 51 et alimente le compartiment à flotteur 7. Le niveau d'eau en remontant dans le réservoir principal 4 vient obstruer à sa base le tube principal 10 en créant progressivement une pression d'air dans la cloche annulaire 15. Cela a pour effet d'abaisser le niveau d'eau dans cette dernière en dessous du siphon 48, le compartiment à flotteur 7 n'étant plus alimenté en eau, cette dernière étant évacuée au-dessus du déversoir 26. Lorsque le niveau d'eau dans le réservoir principal 4 continue d'augmenter le compartiment à flotteur 7 est noyé, ce qui a pour effet de faire remonter le flotteur 6 et interrompre l'arrivée d'eau 1 suivant la même procédure que pour la première variante. En même temps le flotteur de manoeuvre 52 remonte et vient en butée contre le levier d'actionnement 39. Le flotteur 6 est conçu de sorte à maintenir une pression suffisante sur l'orifice d'admission 28 en cas de variation de pression de réseau.

Lors du tirage de la chasse d'eau et de la descente du niveau dans le réservoir principal 4, l'appui sur le bouton de manoeuvre 53 fait descendre à travers le mécanisme de commande 49 le flotteur de manoeuvre 52, lequel fait descendre le flotteur 6 lors du relâchement. Celui-ci fait descendre à son tour le levier de commande 3 ce qui déclenche l'admission d'eau 1. Durant l'admission, le flotteur 6 reste en position basse jusqu'à ce que le niveau d'eau dans le réservoir principal 4 atteigne le niveau de remplissage du compartiment à flotteur 7. Cela provoque la remontée du flotteur 6 et l'arrêt de l'admission.

En cas de petite fuite sur l'écoulement du réservoir principal 4, comme le mécanisme 49 n'a pas été actionné, le compartiment à flotteur 7 ne se vide pas. Le flotteur 6 reste donc en position haute, ce qui maintient le verrouillage de l'admission d'eau 1 même lorsque le réservoir principal 4 se vide.

Pour le réarmement, il suffit d'appuyer sur le bouton de manoeuvre 53 actionnant le mécanisme d'actionnement 49 qui abaisse le flotteur de manoeuvre 52 dans le compartiment à flotteur 7. Cela crée un débordement puis une baisse de niveau lors du relâchement du bouton de manoeuvre 53 et de la remontée du flotteur de manoeuvre 52, et par là même l'enfoncement du flotteur 6 dans le compartiment à flotteur 7 et le déclenchement de l'arrivée d'eau 1.

En cas de grande fuite le réservoir principal 4 reste vide et le tube principal 10 se trouve à l'atmosphère ce qui a pour effet de ramener le niveau d'eau dans la cloche annulaire 15 au niveau du siphon 48 dans lequel l'eau s'écoule finalement vers le compartiment à flotteur 7. Cela entraîne une remontée du flotteur 6 et donc la fermeture de l'admission d'eau 1. Le réarmement est opéré de la même façon que dans le cas d'une petite fuite en actionnant le bouton de manoeuvre 53.

La combinaison des mécanismes d'actionnement 49 créant un débordement pour le déclenchement de l'arrivée d'eau 1 lors d'un tirage de chasse d'eau ou pour le réarmement en cas de mise en sécurité suite à une fuite d'eau ainsi que le principe de fonctionnement du dispositif de détection et de mise en sécurité pour la grande fuite de la fig. 1 qui permet de supprimer le réservoir de lestage 8 ; une telle disposition permet de s'affranchir d'orifices calibrés, améliorant ainsi la fiabilité du dispositif. Le mode de réalisation représenté à la fig. 4 explicite ce principe de fonctionnement.

Le même résultat peut être obtenu en supprimant le réservoir de lestage 8 du dispositif de la fig. 1, ainsi que la partie haute du compartiment à flotteur 7 avec son conduit spécifique 21 et la valve secondaire 20.

Les solutions pour détecter et traiter les grandes fuites et les petites fuites peuvent être combinées différemment entre les variantes 1, 2, 3 et 4, par exemple en réalisant les tubes 10, 11, réservoirs 12, 13, 14 et cloches 15, 17 selon la fig. 1, et le compartiment à flotteur 7 et flotteur 6 selon la fig. 4 ; ou inversement les tube principal 10, réservoir haut 13 et cloche haute 15 selon la fig. 4 avec un compartiment à flotteur 7 et un flotteur 6 selon la fig. 1.

Pour chacune des quatre variantes des fig. 1, 2, 3, et 4 on peut aussi réaliser une variante sans le ou les tubes 10, 11, réservoirs 12, 13, 14 et cloches 15, 17 ; la variante de réalisation permet alors de détecter les petites fuites, et de fermer l'arrivée d'eau 1 en cas de telle petite fuite, mais ne permet pas de pallier à la grande fuite. Ces variantes ne sortent pas du cadre de la présente invention. De telles variantes peuvent éventuellement disposer d'une solution différente pour les grandes fuites.

On peut aussi pour chacune de ces variantes réaliser une variante comprenant les tubes 10, 11, réservoirs 12, 13, 14 et cloches 15, 17, mais comprenant un compartiment à flotteur différent de la solution conforme à l'invention. Les petites fuites sont détectées autrement, ou ne sont pas détectées, mais les grandes fuites sont alors détectées et traitées conformément à l'invention.

Plusieurs variantes possibles du dispositif concernent le mécanisme de réarmement 47. Celui-ci peut être couplé au levier de commande 3 de la chasse d'eau ou être constitué par un bouton supplémentaire. Le réarmement peut aussi être indépendant de la commande de chasse d'eau en passant par exemple dans une gorge traversant l'orifice du réservoir principal 4 au droit du raccord d'alimentation, ou à travers un second canal moulé dans ce dernier et prévu à cet effet permettant différents modes de commande. Par exemple ce peut être un mode de commande mécanique, en utilisant un câble dans une gaine, ou pneumatique en utilisant un soufflet, ou encore électromécanique, ou autre.

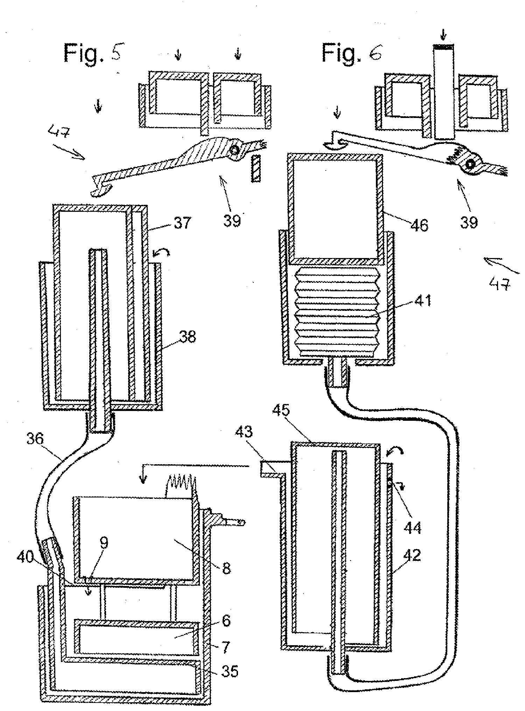

Deux variantes plus particulièrement intéressantes du mécanisme de réarmement 47 sont ici décrites et se réfèrent aux figures 5 et 6.

En relation avec la variante 2 de l'invention la figure 5 montre un compartiment à flotteur 7 comportant un flotteur 6 un réservoir de lestage 8 et une cloche 35 positionnée sous le flotteur 6. Ladite cloche 35 est reliée par un tuyau 36 à l'intérieur d'un piston 37 disposé dans un cylindre 38. Ledit piston 37 est en relation avec un levier 39 permettant à l'utilisateur de la chasse d'eau d'abaisser le piston 37 pour le réarmement.

Lors de la mise en eau du réservoir principal 4, le cylindre 38 est alimenté par l'eau venant de l'admission, par exemple depuis le déversoir 26. Le cylindre 38 se remplit alors progressivement faisant remonter le piston 37 grâce à son flotteur interne, le piston 37 se mettant en buttée contre le levier 39. Lorsque l'eau d'admission vient inonder le compartiment à flotteur 7 et le réservoir de lestage 8, l'air dans la cloche 35 est remplacé par l'eau et chassé par le tuyau 36 vers le piston 37, abaissant le niveau d'eau dans ce dernier. Lors d'une petite ou d'une grande fuite le réservoir de lestage 8 est vide et en position haute, le compartiment à flotteur 7 est rempli d'eau jusqu'au rebord 40. En appuyant sur le piston 37 au travers du levier d'actionnement 39 l'air dans le piston 37 se trouve comprimé puis transvasé vers la cloche 35 en prenant la place de l'eau qui s'y trouve et qui s'évacue au-dessus du rebord 40. Lorsque le levier 39 est relâché le piston 37 remonte en rééquilibrant les pressions, l'eau dans le compartiment à flotteur 7 remplit à nouveau la cloche 35 en faisant chuter le niveau et descendre le flotteur 6, ce qui a pour effet d'entraîner l'ouverture de l'admission d'eau 1 et relancer un cycle de remplissage. Le piston 37 et son cylindre 38 peuvent être remplacés par le soufflet 41 de la fig. 6.

Selon une deuxième variante de réarmement illustrée sur la figure 6 le piston 37 est remplacé par un soufflet 41 et un cylindre 46. Le soufflet 41 est relié par un tuyau à un vase 42 rempli par l'eau d'admission lors du remplissage du réservoir principal 4, lequel vase comporte en interne une cloche 45. Ledit vase comporte en outre un bec verseur 43 et un orifice d'écoulement 44. Ce dernier est calibré de manière à évacuer juste le débit d'appoint d'eau permettant de maintenir le niveau dans le vase en dessous de celui du bec verseur 43.

Une première manoeuvre de réarmement est nécessaire lors de la première mise en eau pour armer le dispositif. Le cylindre 46 par l'intermédiaire du levier 39 comprime alors le soufflet 41 chassant l'air à travers le tuyau de liaison vers la cloche 45. L'air s'évacue alors à la base de cette dernière, et l'eau y prend place lors du relâchement du bouton de réarmement.

Lorsque le levier d'actionnement 39 pour le réarmement est enclenché le cylindre 46 est abaissé en chassant l'air du soufflet 41 vers la cloche 45. Cet air chasse l'eau sous la cloche 45 et provoque son évacuation par le bec verseur 43. Ledit bec verseur 43 est positionné au-dessus du réservoir de lestage 8 de manière à recevoir cette eau de débordement. Le remplissage du réservoir de lestage 8 provoque en conséquence la descente du flotteur 6 et l'ouverture de l'admission d'eau 1 dans le réservoir principal 4.

Les mécanismes de réarmement 47 présentés aux fig. 5 et 6 sont également utilisés comme mécanismes d'actionnement 49.
1. arrivée d'eau, admission d'eau
2. valve principale
3. levier de commande
4. réservoir principal
5. colonne de remplissage
6. flotteur
7. compartiment à flotteur
8. réserve de lestage
9. orifice d'écoulement calibré
10. tube principal
11. deuxième tube
12. réservoir bas
13. réservoir haut
14. réservoir intermédiaire
15. cloche haute, cloche annulaire
16. ouverture
17. cloche basse
18. orifice d'écoulement calibré
19. orifice d'écoulement
20. valve secondaire
21. conduit spécifique
22. bac de surverse
23. pièce
24. pièce support
25. vis de réglage
26. déversoir
27. rebord
28. orifice d'admission
29. rebord
30. ouverture
31. déversoir
32. orifice
33. déversoir
34. orifice
35. cloche
36. tuyau
37. piston
38. réservoir
39. levier, levier d'actionnement
40. rebord
41. soufflet
42. réservoir
43. bec verseur
44. orifice d'écoulement
45. cloche
46. cylindre
47. mécanisme de réarmement ou d'actionnement
48. siphon
49. mécanisme d'actionnement
50. compartiment central
51. tube central
52.flotteur de manoeuvre
53. bouton de manoeuvre

## Revendications

1. Dispositif de détection de fuites et de coupure d'une arrivée d'eau (1) destinée à communiquer avec un réservoir principal (4) de chasse de toilettes dans lequel l'arrivée d'eau (1) est contrôlée par une valve principale (2) dont la fermeture est assurée par un levier de commande (3), laquelle valve principale (2) est destinée à alimenter le réservoir principal (4) de chasse par l'intermédiaire d'une colonne de remplissage (5), le dispositif comprenant un flotteur (6) et un compartiment à flotteur (7), le flotteur (6) contenu dans le compartiment à flotteur (7), le flotteur (6) étant conçu apte à assurer le pivotement du levier de commande (3) vers la position de fermeture de la valve principale (2) lorsque le réservoir principal (4) de chasse est rempli, **caractérisé en ce que** ledit compartiment à flotteur (7) est fermé sur sa partie basse et sur tout son pourtour latéral de sorte que l'éjection de l'eau contenue dans ledit compartiment à flotteur (7) ne peut se faire qu'en faisant passer l'eau au-dessus d'au moins une de ses parois latérales, et **en ce que** ledit dispositif comprend un mécanisme d'actionnement (8, 47, 49) configuré pour permettre le vidage par débordement dudit compartiment à flotteur (7), ledit mécanisme étant configuré pour provoquer l'enfoncement du flotteur (6) dans ledit compartiment à flotteur (7), de sorte à provoquer l'ouverture de l'arrivée d'eau (1).

2. Dispositif selon la revendication précédente, dans lequel ledit mécanisme (49) comprend un flotteur de manoeuvre (52) relié à un levier, ou bouton, de manoeuvre (53) de la chasse configuré pour qu'un actionnement dudit levier, ou bouton, de manoeuvre (53) provoque l'enfoncement dudit flotteur de manoeuvre (52) dans ledit compartiment à flotteur (7) et une surverse d'une partie de l'eau contenue dans ledit compartiment à flotteur (7) et que le relâchement dudit levier, ou bouton, de manoeuvre (53) permet la remontée dudit flotteur de manoeuvre (52) ce qui produit un enfoncement du flotteur (6) et une ouverture de l'arrivée d'eau (1).

3. Dispositif selon la revendication 1, dans lequel ledit mécanisme comprend un réservoir de lestage (8) situé au-dessus dudit flotteur (6), configuré pour provoquer l'enfoncement dudit flotteur (6) en cas d'actionnement de la chasse.

4. Dispositif selon la revendication précédente dans lequel l'écoulement de l'eau du réservoir de lestage (8) s'effectue en dehors du compartiment à flotteur (7) par un conduit spécifique (21).

5. Dispositif selon la revendication précédente dans lequel, ledit conduit spécifique (21) est muni d'un orifice d'écoulement (19) apte à communiquer vers le réservoir principal (4) de la chasse d'eau, lequel orifice d'écoulement (19) étant pourvu d'une valve secondaire (20), et permettant l'écoulement de l'eau en provenance du réservoir de lestage (8) lorsque celui-ci est en mesure de se vider.

6. Dispositif selon la revendication 3 dans lequel le compartiment à flotteur (7) reçoit l'eau du réservoir de lestage (8) lorsque celui-ci est en mesure de se vider.

7. Dispositif selon l'une des revendications précédentes, dans lequel un tube principal (10) est conçu apte à mettre en communication une cloche haute (15), disposée dans un réservoir haut (13) situé au-dessus dudit compartiment à flotteur (7), avec la zone proche du niveau du bas du réservoir principal (4) de chasse, ledit réservoir haut (13), ladite cloche haute (15) et ledit tube principal (10) étant configurés de sorte qu'une baisse de niveau d'eau dans le tube principal (10) produit une montée du niveau d'eau dans la cloche haute (15), ladite montée du niveau d'eau produisant une remontée du flotteur (6).

8. Dispositif selon la revendication précédente, dans lequel ledit réservoir haut (13) et ladite cloche haute (15) sont configurés pour qu'une montée du niveau d'eau dans la cloche haute (15) produise un écoulement par un siphon (48) vers un compartiment central (50), puis par un tube central (51) vers le compartiment à flotteur (7).

9. Dispositif selon la revendication 7 dans lequel les extrémités de deux tubes, le tube principal (10) et un deuxième tube (11) aboutissent dans la cloche haute (15), ledit réservoir haut (13) étant alimenté en eau au moyen d'une ouverture (16) pratiquée dans la colonne de remplissage (5).

10. Dispositif selon l'une des revendications 7 à 9 dans lequel l'extrémité basse dudit tube principal (10) est munie d'une cloche basse (17) disposée dans un réservoir bas (12) comportant un orifice d'écoulement calibré (18).

11. Dispositif selon l'une des revendications 7 à 10 dans lequel un réservoir intermédiaire (14) est solidaire du compartiment à flotteur (7) et susceptible de l'alimenter en eau pour son remplissage.

12. Dispositif selon l'une des revendications 7 à 10 dans lequel un réservoir intermédiaire (14) est solidaire du réservoir haut (13) et alimenté en eau par ce dernier au moyen d'un bac de surverse (22).

13. Dispositif selon l'une des revendications précédentes comportant un mécanisme de réarmement (47) muni d'une cloche (35) positionnée sous le flotteur (6), laquelle cloche (35) étant reliée par un tuyau (36) à l'intérieur d'un piston (37), lequel piston (37) étant déplacé par le levier d'actionnement (39).

14. Dispositif selon l'une des revendications 1 à 12 comportant un mécanisme de réarmement (47) muni d'une cloche (35) positionnée sous le flotteur (6), laquelle cloche (35) étant reliée par un tuyau (36) à un soufflet (41), lequel soufflet étant actionné par un cylindre (46) déplacé par le levier d'actionnement (39).

15. Dispositif selon l'une des revendications 1 à 12 comportant un mécanisme de réarmement (47) comportant un vase (42) muni d'une cloche (45) dans laquelle aboutit un tuyau relié à un soufflet (41), lequel soufflet (41) étant actionné par un cylindre (46) déplacé par le levier d'actionnement (39).

## Patentansprüche

1. Vorrichtung zur Leckerkennung und Unterbrechung einer Wasserzufuhr (1), die bestimmt ist, mit einem Hauptbehälter (4) einer WC-Spülung zu kommunizieren, wobei die Wasserzufuhr (1) von einem Hauptventil (2) gesteuert wird, dessen Schließen von einem Steuerhebel (3) gesichert wird, wobei das Hauptventil (2) bestimmt ist, den Hauptbehälter (4) der Spülung mittels eines Füllrohrs (5) zu versorgen, wobei die Vorrichtung einen Schwimmer (6) und ein Schwimmerfach (7) umfasst, wobei der Schwimmer (6) in dem Schwimmerfach (7) enthalten ist, wobei der Schwimmer (6) derart konstruiert ist, dass er imstande ist, das Schwenken des Steuerhebels (3) in seine Verschlussposition des Hauptventils (2) zu sichern, wenn der Hauptbehälter (4) der Spülung gefüllt ist, **dadurch gekennzeichnet, dass** das Schwimmerfach (7) in seinem unteren Teil und über seinen gesamten seitlichen Umfang geschlossen ist, so dass die Ausgabe des in dem Schwimmerfach (7) enthaltenen Wassers nur dadurch erfolgen kann, dass das Wasser über mindestens eine seiner Seitenwände strömt, und dadurch, dass die Vorrichtung einen Betätigungsmechanismus (8, 47, 49) umfasst, der konfiguriert ist, um die Entleerung durch Überlaufen des Schwimmerfachs (7) zu erlauben, wobei der Mechanismus konfiguriert ist, um das Herunterdrücken des Schwimmers (6) in das Schwimmerfach (7) zu bewirken, um das Öffnen der Wasserzufuhr (1) zu bewirken.

2. Vorrichtung nach vorangehendem Anspruch, wobei der Mechanismus (49) einen Betätigungsschwimmer (52) umfasst, der mit einem Betätigungshebel oder -knopf (53) der Spülung verbunden ist, der konfiguriert ist, damit eine Betätigung des Betätigungshebels oder -knopfs (53) das Herunterdrücken des Betätigungsschwimmers (52) in das Schwimmerfach (7) und ein Überlaufen eines Teils des in dem Schwimmerfach (7) enthaltenen Wassers bewirkt und das Loslassen des Betätigungshebels oder -knopfs (53) das Ansteigen des Betätigungsschwimmers (52) erlaubt, was ein Herunterdrücken des Schwimmers (6) und ein Öffnen der Wasserzufuhr (1) bewirkt.

3. Vorrichtung nach Anspruch 1, wobei der Mechanismus einen Ballastbehälter (8) umfasst, der sich über dem Schwimmer (6) befindet, der konfiguriert ist, um das Herunterdrücken des Schwimmers (6) bei Betätigung der Spülung zu bewirken.

4. Vorrichtung nach vorangehendem Anspruch, wobei das Fließen des Wassers aus dem Ballastbehälter (8) außerhalb des Schwimmerfachs (7) durch eine spezielle Leitung (21) erfolgt.

5. Vorrichtung nach vorangehendem Anspruch, wobei die spezielle Leitung (21) mit einer Abflussöffnung (19) ausgestattet ist, die imstande ist, zum Hauptbehälter (4) der Wasserspülung zu kommunizieren, wobei die Abflussöffnung (19) mit einem Sekundärventil (20) ausgestattet ist und das Fließen des vom Ballastbehälter (8) kommenden Wassers erlaubt, wenn dieser in der Lage ist, sich zu entleeren.

6. Vorrichtung nach Anspruch 3 wobei das Schwimmerfach (7) das Wasser vom Ballastbehälter (8) erhält, wenn dieser in der Lage ist, sich zu entleeren.

7. Vorrichtung nach einem der vorangehenden Ansprüche, wobei ein Hauptrohr (10) eine hohe Glocke (15), die in einem hohen Behälter (13) über dem Schwimmerfach (7) angeordnet ist, mit der Zone in der Nähe des Niedrigstands des Hauptbehälters (4) der Spülung in Kommunikation versetzt, wobei der hohe Behälter (13), die hohe Glocke (15) und das Hauptrohr (10) derart konfiguriert sind, dass ein Sinken des Wasserstands im Hauptrohr (10) zu einem Ansteigen des Wasserstands in der hohen Glocken (15) führt, wobei das Ansteigen des Wasserstands zu einem Ansteigen des Schwimmers (6) führt.

8. Vorrichtung nach vorangehendem Anspruch, wobei der hohe Behälter (13) und die hohe Glocke (15) konfiguriert sind, damit ein Ansteigen des Wasserstands in der hohen Glocke (15) ein Fließen durch einen Siphon (48) zu einem zentralen Fach (50), dann durch ein zentrales Rohr (51) zum Schwimmerfach (7) bewirkt.

9. Vorrichtung nach Anspruch 7, wobei die Enden von zwei Rohren, des Hauptrohrs (10) und eines zweiten Rohrs (11), in der hohen Glocke (15) enden, wobei der hohe Behälter (13) mittels einer im Füllrohr (5) eingearbeiteten Öffnung (16) mit Wasser versorgt wird.

10. Vorrichtung nach einem der Ansprüche 7 bis 9, wobei das niedrige Ende des Hauptrohrs (10) mit einer niedrigen Glocke (17) ausgestattet ist, die in einem niedrigen Behälter (12) angeordnet ist, der eine kalibrierte Abflussöffnung (18) aufweist.

11. Vorrichtung nach einem der Ansprüche 7 bis 10, wobei ein Übergangsbehälter (14) mit dem Schwimmerfach (7) fest verbunden und imstande ist, es mit Wasser zwecks seines Füllens zu versorgen.

12. Vorrichtung nach einem der Ansprüche 7 bis 10, wobei ein Übergangsbehälter (14) mit dem hohen Behälter (13) fest verbunden ist und von diesem mittels eines Überlaufbehälters (22) mit Wasser versorgt wird.

13. Vorrichtung nach einem der vorangehenden Ansprüche, aufweisend einen mit einer Glocke (35), die unter dem Schwimmer (6) positioniert ist, ausgestatteten Lademechanismus (47), wobei die Glocke (35) durch einen Schlauch (36) mit dem Innern eines Kolbens (37) verbunden ist, wobei der Kolben (37) durch den Betätigungshebel (39) verlagert wird.

14. Vorrichtung nach einem der Ansprüche 1 bis 12, aufweisend einen mit einer Glocke (35), die unter dem Schwimmer (6) positioniert ist, ausgestatteten Lademechanismus (47), wobei die Glocke (35) durch einen Schlauch (36) mit einem Balg (41) verbunden ist, wobei der Balg durch einen Zylinder (46), der von dem Betätigungshebel (39) verlagert wird, betätigt wird.

15. Vorrichtung nach einem der Ansprüche 1 bis 12, aufweisend einen Lademechanismus (47), aufweisend ein Gefäß (42), das mit einer Glocke (45) ausgestattet ist, in welche ein mit einem Balg (41) verbundener Schlauch mündet, wobei der Balg (41) von einem von dem Betätigungshebel (39) verlagerten Zylinder (46) betätigt wird.

## Claims

1. A device for detecting leaks and shutting off a water intake (1) intended to communicate with a main toilet flushing cistern (4) in which the water intake (1) is controlled by a main valve (2), the closing of which is ensured by a control lever (3), said main valve (2) being intended to supply the main flushing cistern (4) via a filling column (5), the device comprising a float (6) and a float compartment (7), the float (6) contained in the float compartment (7), the float (6) being designed to be able to ensure the pivoting of the control lever (3) toward the closed position of the main valve (2) when the main flushing cistern (4) is filled, **characterized in that** said float compartment (7) is closed on its lower part and over its entire lateral perimeter such that the ejection of the water contained in said float compartment (7) can only be done by causing the water to pass above at least one of its side walls, and **in that** said device comprises an actuating mechanism (8, 47, 49) configured to allow the emptying by overflow of said float compartment (7), said mechanism being configured to cause the pushing of the float (6) into said float compartment (7), so as to cause the opening of the water intake (1).

2. The device according to the preceding claim, wherein said mechanism (49) comprises a maneuvering float (52) connected to a maneuvering lever or button (53) of the flushing system configured so that actuating said maneuvering lever or button (53) causes said maneuvering float (52) to be pushed into said float compartment (7) and part of the water contained in said float compartment (7) to overflow, and such that releasing said maneuvering lever or button (53) allows said maneuvering float (52) to rise, which produces a pushing in of the float (6) and an opening of the water intake (1).

3. The device according to claim 1, wherein said mechanism comprises a ballast reservoir (8) located above said float (6), configured to cause said float (6) to be pushed in if the flushing system is actuated.

4. The device according to the preceding claim, wherein the flow of the water from the ballast reservoir (8) is done outside the float compartment (7) by a specific pipe (21).

5. The device according to the preceding claim, wherein said specific pipe (21) is provided with a flow orifice (19) able to communicate toward the main flushing system cistern (4), said flow orifice (19) being provided with a secondary valve (20), and allowing water from the ballast reservoir (8) to flow when the latter is able to empty itself.

6. The device according to claim 3, wherein the float compartment (7) receives the water from the ballast reservoir (8) when the latter is able to empty itself.

7. The device according to one of the preceding claims, wherein a main tube (10) is designed to be able to place an upper bell (15), positioned in an upper tank (13) situated above said float compartment (7), in communication with the zone close to the level of the bottom of the main flushing system tank (4), said upper tank (13), said upper bell (15) and said main tube (10) being configured such that a decrease in water level in the main tube (10) causes an increase in the water level in the upper bell (15), said rise in the water level causing the float (6) to rise.

8. The device according to the preceding claim, wherein said upper tank (13) and said upper bell (15) are configured so that a rising water level in the upper bell (15) causes a flow through a siphon (48) toward a central compartment (50), then through a central tube (51) toward the float compartment (7).

9. The device according to claim 7, wherein the ends of two tubes, the main tube (10) and a second tube (11), end in the upper bell (15), said upper tank (13) being supplied with water through an opening (16) formed in the filling column (5).

10. The device according to one of claims 7 to 9, in which the lower end of said main tube (10) is provided with a lower bell (17) positioned in a lower tank (12) including a calibrated flow orifice (18).

11. The device according to one of claims 7 to 10, wherein an intermediate tank (14) is secured to the float compartment (7) and able to supply it with water for filling thereof.

12. The device according to one of claims 7 to 10, wherein an intermediate tank (14) is secured to the upper tank (13) and supplied with water by the latter using an overflow tub (22).

13. The device according to one of the preceding claims, including a rearming mechanism (47) provided with a bell (35) positioned below the float (6), said bell (35) being connected by a hose (36) to the inside of a piston (37), said piston (37) being moved by the actuating lever (39).

14. The device according to one of claims 1 to 12, including a rearming mechanism (47) provided with a bell (35) positioned below the float (6), said bell (35) being connected by a hose (36) to a bellows (41), said bellows being actuated by a cylinder (46) moved by the actuating lever (39).

15. The device according to one of claims 1 to 12, including a rearming mechanism (47) including a vessel (42) provided with a bell (45) in which a hose ends that is connected to a bellows (41), said bellows (41) being actuated by a cylinder (46) moved by the actuating lever (39).
